# EUROPEAN PATENT APPLICATION

(11) **EP 3 528 342 A1**
(43) Date of publication of application: **21.08.2019**
(21) Application number: 16921862.5
(22) Date of filing: 18.11.2016
(51) Int. Cl.: H01Q 21/00, H04B 7/00

(54) **ANTENNA SYSTEM, VIRTUAL ANTENNA PORT MAPPING METHOD AND APPARATUS**

(71) Applicant: Huawei Technologies Co., Ltd., Longgang District Shenzhen, Guangdong 518129 (CN)
(72) Inventor: DONG, Wei, Shenzhen Guangdong 518129 (CN); XIE, Boyun, Shenzhen Guangdong 518129 (CN); ZHANG, Xiaotian, Shenzhen Guangdong 518129 (CN)
(74) Representative: Maiwald Patent- und Rechtsanwaltsgesellschaft mbH
(86) International application number: PCT/CN2016/106456
(87) International publication number: WO 2018/090342

(57) **Abstract**

Embodiments of the present invention disclose an antenna system, a virtual antenna port mapping method, and an apparatus, and relate to the field of communications technologies, to implement network coverage on a mid- or high-rise building. The antenna system includes: at least one antenna module, where the antenna module includes a longitudinally-arranged first antenna array and a longitudinally-arranged second antenna array; and at least one electrical adjustment group in a one-to-one correspondence with the at least one antenna module, where the electrical adjustment group includes a first electrical adjustment and a second electrical adjustment; the first electrical adjustment in the electrical adjustment group corresponding to each antenna module is connected to the first antenna array in the antenna module, and is configured to adjust a downtilt angle of a vertical lobe of a beam generated by the first antenna array in the antenna module; and the second electrical adjustment in the electrical adjustment group corresponding to each antenna module is connected to the second antenna array in the antenna module, and is configured to adjust a downtilt angle of a vertical lobe of a beam generated by the second antenna array in the antenna module.

## Description

### TECHNICAL FIELD

The present invention relates to the field of communications technologies, and in particular, to an antenna system, a virtual antenna port mapping method, and an apparatus.

### BACKGROUND

With rapid development of smartphones and mobile Internet services, operator networks are faced with increasingly greater capacity pressure. Therefore, how to increase a network capacity to meet a growing data requirement of a user and reduce network construction and operation costs are problems that face all operators. A micro base station is characterized by a large capacity and a high rate, so that a network capacity can be increased, and a user Internet access rate in an edge coverage area of a macro base station can be increased. The micro base station can also adapt to various backhaul networks, and can be deployed flexibly and quickly, to bring better mobile broadband experience to a user.

Currently, the micro base station implements network coverage in Manner 1, and the macro base station implements network coverage in Manner 2.

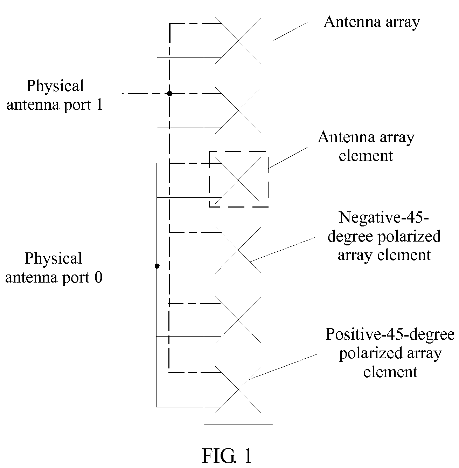

Manner 1: As shown in FIG. 1, an antenna system of the micro base station includes an antenna array, the antenna array includes six longitudinally-arranged antenna array elements, and each antenna array element includes one positive-45-degree polarized array element and one negative-45-degree polarized array element. Six positive-45-degree polarized array elements correspond to a physical antenna port 0, and six negative-45-degree polarized array elements correspond to a physical antenna port 1. A baseband processing unit (Baseband Unit, BBU for short) in the micro base station respectively maps a virtual antenna port 0 (Port 0) and a virtual antenna port 1 (Port 1) to the physical antenna port 0 and the physical antenna port 1 by using a weighted value [1, 1], so that the antenna system generates a beam in a fixed shape through the mapping, thereby implementing network coverage.

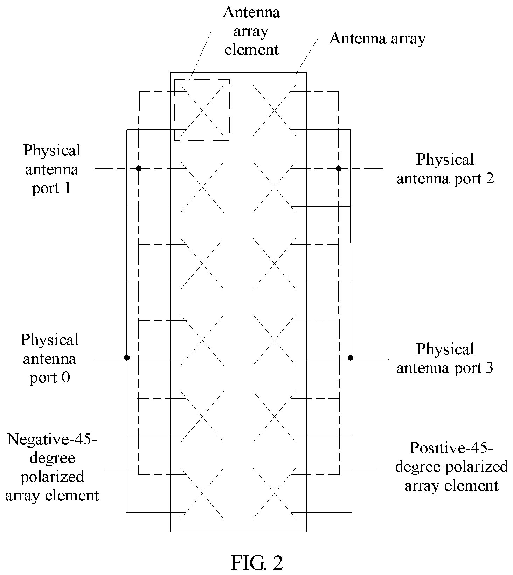

Manner 2: As shown in FIG. 2, an antenna system of the macro base station includes an antenna array, the antenna array includes two columns of antenna array elements, each column includes six longitudinally-arranged antenna array elements, and each antenna array element includes one positive-45-degree polarized array element and one negative-45-degree polarized array element. Six positive-45-degree polarized array elements of antenna array elements in a first column correspond to a physical antenna port 0, six negative-45-degree polarized array elements of the antenna array elements in the first column correspond to a physical antenna port 1, six positive-45-degree polarized array elements of antenna array elements in a second column correspond to a physical antenna port 2, and six negative-45-degree polarized array elements of the antenna array elements in the second column correspond to a physical antenna port 3. A BBU in the macro base station maps a virtual antenna port 0 (Port 0) to the physical antenna port 0 and the physical antenna port 1, and maps a virtual antenna port 1 (Port 1) to the physical antenna port 2 and the physical antenna port 3, so that the antenna system generates a beam in a fixed shape through the mapping, thereby implementing network coverage.

Manner 1 may be applied only to a low-rise residential area and street coverage scenario, and a main installation manner is installing the antenna system on a body of a pole on a street. Manner 2 is applied to a wide coverage scenario in which buildings are not densely packed. Because a radio remote unit (Radio Remote Unit, RRU for short) and the antenna system of the macro base station are relatively large in volume and weight, Manner 2 cannot be applied to the low-rise residential area and street coverage scenario. In the antenna systems in Manner 1 and Manner 2, a vertical-dimension beam generated by the antenna system is fixedly a narrow beam. Therefore, neither Manner 1 nor Manner 2 can meet a mid- or high-rise coverage scenario.

### SUMMARY

Embodiments of the present invention provide an antenna system, a virtual antenna port mapping method, and an apparatus, to implement network coverage on a mid- or high-rise building.

The following technical solutions are used in the embodiments of the present invention to achieve the foregoing objective.

According to a first aspect, an antenna system is provided, and includes: at least one antenna module, where the antenna module includes a longitudinally-arranged first antenna array and a longitudinally-arranged second antenna array; and at least one electrical adjustment group in a one-to-one correspondence with the at least one antenna module, where the electrical adjustment group includes a first electrical adjustment and a second electrical adjustment; the first electrical adjustment in the electrical adjustment group corresponding to each antenna module is connected to the first antenna array in the antenna module, and is configured to adjust a downtilt angle of a vertical lobe of a beam generated by the first antenna array in the antenna module; and the second electrical adjustment in the electrical adjustment group corresponding to each antenna module is connected to the second antenna array in the antenna module, and is configured to adjust a downtilt angle of a vertical lobe of a beam generated by the second antenna array in the antenna module.

The antenna system provided in the first aspect includes at least two antenna arrays. Therefore, at least two beams can be generated, and directions of the two beams can be controlled by using an electrical adjustment, so that the two beams jointly form a vertical-dimension wide beam (or narrow beam), to implement network coverage on a high-rise building (or a low-rise building).

In a possible design, the first antenna array in the antenna module includes N1 longitudinally-arranged antenna array elements, the second antenna array in the antenna module includes N2 longitudinally-arranged antenna array elements, each antenna array element includes one positive-45-degree polarized array element and one negative-45-degree polarized array element, N1 positive-45-degree polarized array elements of the first antenna array correspond to a third physical antenna port, N1 negative-45-degree polarized array elements of the first antenna array correspond to a fourth physical antenna port, N2 positive-45-degree polarized array elements of the second antenna array correspond to a first physical antenna port, N2 negative-45-degree polarized array elements of the second antenna array correspond to a second physical antenna port, and both N1 and N2 are integers greater than 0.

According to a second aspect, a virtual antenna port mapping method is provided, and includes: obtaining, by a baseband processing unit BBU, architecture information of an antenna system, where the antenna system includes at least one antenna module, the antenna module includes a longitudinally-arranged first antenna array and a longitudinally-arranged second antenna array, and a downtilt angle of a vertical lobe of a beam generated by the first antenna array is the same as or different from a downtilt angle of a vertical lobe of a beam generated by the second antenna array; and mapping, by the BBU, a virtual antenna port of the BBU to a physical antenna port in the antenna system based on the architecture information of the antenna system and the virtual antenna port.

According to the method provided in the second aspect, the virtual antenna port may be mapped to the physical antenna port, so that the antenna module can generate a combined beam. Because the downtilt angles of the vertical lobes of the two beams that are generated by the two antenna arrays and that form the combined beam may be different, the combined beam may be a vertical-dimension wide beam, to implement network coverage on a high-rise building.

In a possible design, the first antenna array in the antenna module includes N1 longitudinally-arranged antenna array elements, the second antenna array in the antenna module includes N2 longitudinally-arranged antenna array elements, each antenna array element includes one positive-45-degree polarized array element and one negative-45-degree polarized array element, N1 positive-45-degree polarized array elements of the first antenna array correspond to a third physical antenna port, N1 negative-45-degree polarized array elements of the first antenna array correspond to a fourth physical antenna port, N2 positive-45-degree polarized array elements of the second antenna array correspond to a first physical antenna port, N2 negative-45-degree polarized array elements of the second antenna array correspond to a second physical antenna port, and both N1 and N2 are integers greater than 0.

In a possible design, the antenna system includes one antenna module, a downtilt angle of a vertical lobe of a beam generated by a first antenna array in the antenna module is the same as a downtilt angle of a vertical lobe of a beam generated by a second antenna array in the antenna module, there are two virtual antenna ports, and the mapping, by the BBU, a virtual antenna port of the BBU to a physical antenna port in the antenna system based on the architecture information of the antenna system and the virtual antenna port includes: mapping, by the BBU, a virtual antenna port 0 in the two virtual antenna ports to a first physical antenna port and a third physical antenna port in the antenna module by using a weighted value [1, 1], and mapping a virtual antenna port 1 in the two virtual antenna ports to a second physical antenna port and a fourth physical antenna port in the antenna module by using a weighted value [1, 1].

In the possible design, a combined beam of the antenna module is a vertical-dimension narrow beam, and the narrow beam may perform network coverage on a low-rise building and a street.

In a possible design, the antenna system includes one antenna module, a downtilt angle of a vertical lobe of a beam generated by a first antenna array in the antenna module is different from a downtilt angle of a vertical lobe of a beam generated by a second antenna array in the antenna module, there are two virtual antenna ports, and the mapping, by the BBU, a virtual antenna port of the BBU to a physical antenna port in the antenna system based on the architecture information of the antenna system and the virtual antenna port includes: mapping, by the BBU, a virtual antenna port 0 in the two virtual antenna ports to a first physical antenna port and a fourth physical antenna port in the antenna module by using a weighted value [1, 1], and mapping a virtual antenna port 1 in the two virtual antenna ports to a second physical antenna port and a third physical antenna port in the antenna module by using a weighted value [1, -1].

In the possible design, a combined beam of the antenna module is a vertical-dimension wide beam, and the wide beam may perform network coverage on a high-rise building.

In a possible design, the antenna system includes one antenna module, there are four virtual antenna ports, and the mapping, by the BBU, a virtual antenna port of the BBU to a physical antenna port in the antenna system based on the architecture information of the antenna system and the virtual antenna port includes: mapping, by the BBU, a virtual antenna port 0 in the four virtual antenna ports to a first physical antenna port in the antenna module, mapping a virtual antenna port 1 in the four virtual antenna ports to a second physical antenna port in the antenna module, mapping a virtual antenna port 2 in the four virtual antenna ports to a third physical antenna port in the antenna module, and mapping a virtual antenna port 3 in the four virtual antenna ports to a fourth physical antenna port in the antenna module.

In the possible design, when downtilt angles of vertical lobes of beams generated by a first antenna array and a second antenna array in the antenna module are the same, a combined beam of the antenna module is a vertical-dimension narrow beam, and the narrow beam may perform network coverage on a low-rise building and a street. When downtilt angles of vertical lobes of beams generated by a first antenna array and a second antenna array in the antenna module are different, a combined beam of the antenna module is a vertical-dimension wide beam, and the wide beam may perform network coverage on a high-rise building.

In a possible design, the antenna system includes two antenna modules, a downtilt angle of a vertical lobe of a beam generated by a first antenna array in each antenna module is the same as a downtilt angle of a vertical lobe of a beam generated by a second antenna array in the antenna module, there are two virtual antenna ports, and the mapping, by the BBU, a virtual antenna port of the BBU to a physical antenna port in the antenna system based on the architecture information of the antenna system and the virtual antenna port includes: mapping, by the BBU, a virtual antenna port 0 in the two virtual antenna ports to a first physical antenna port of a first antenna module in the two antenna modules, a third physical antenna port of the first antenna module, a first physical antenna port of a second antenna module in the two antenna modules, and a third physical antenna port of the second antenna module by using a weighted value [1, 1, 1, 1], and mapping a virtual antenna port 1 in the two virtual antenna ports to a second physical antenna port of the first antenna module in the two antenna modules, a fourth physical antenna port of the first antenna module, a second physical antenna port of the second antenna module in the two antenna modules, and a fourth physical antenna port of the second antenna module by using a weighted value [1, 1, 1, 1].

In the possible design, a combined beam of the first antenna module and a combined beam of the second antenna module are both vertical-dimension narrow beams, and the two narrow beams may perform network coverage on different low-rise buildings or streets.

In a possible design, the antenna system includes two antenna modules, a downtilt angle of a vertical lobe of a beam generated by a first antenna array in each antenna module is different from a downtilt angle of a vertical lobe of a beam generated by a second antenna array in the antenna module, there are two virtual antenna ports, and the mapping, by the BBU, a virtual antenna port of the BBU to a physical antenna port in the antenna system based on the architecture information of the antenna system and the virtual antenna port includes: mapping, by the BBU, a virtual antenna port 0 in the two virtual antenna ports to a first physical antenna port of a first antenna module in the two antenna modules, a fourth physical antenna port of the first antenna module, a first physical antenna port of a second antenna module in the two antenna modules, and a fourth physical antenna port of the second antenna module by using a weighted value [1, 1, 1, 1], and mapping a virtual antenna port 1 in the two virtual antenna ports to a second physical antenna port of the first antenna module in the two antenna modules, a third physical antenna port of the first antenna module, a second physical antenna port of the second antenna module in the two antenna modules, and a third physical antenna port of the second antenna module by using a weighted value [-1, 1, -1, 1].

In the possible design, a combined beam of the first antenna module and a combined beam of the second antenna module are both vertical-dimension wide beams, and the two wide beams may perform network coverage on different high-rise buildings.

In a possible design, the antenna system includes two antenna modules, a downtilt angle of a vertical lobe of a beam generated by a first antenna array in a first antenna module in the two antenna modules is different from a downtilt angle of a vertical lobe of a beam generated by a second antenna array in the first antenna module, a downtilt angle of a vertical lobe of a beam generated by a first antenna array in a second antenna module in the two antenna modules is the same as a downtilt angle of a vertical lobe of a beam generated by a second antenna array in the second antenna module, there are two virtual antenna ports, and the mapping, by the BBU, a virtual antenna port of the BBU to a physical antenna port in the antenna system based on the architecture information of the antenna system and the virtual antenna port includes: mapping, by the BBU, a virtual antenna port 0 in the two virtual antenna ports to a first physical antenna port of the first antenna module in the two antenna modules, a fourth physical antenna port of the first antenna module, a first physical antenna port of the second antenna module in the two antenna modules, and a third physical antenna port of the second antenna module by using a weighted value [1, 1, 1, 1], and mapping a virtual antenna port 1 in the two virtual antenna ports to a second physical antenna port of the first antenna module in the two antenna modules, a third physical antenna port of the first antenna module, a second physical antenna port of the second antenna module in the two antenna modules, and a fourth physical antenna port of the second antenna module by using a weighted value [-1, 1, 1, 1].

In the possible design, a combined beam of the first antenna module is a vertical-dimension wide beam, and the wide beam may perform network coverage on a high-rise building; and a combined beam of the second antenna module is a vertical-dimension narrow beam, and the narrow beam may perform network coverage on a low-rise building and a street.

In a possible design, the antenna system includes two antenna modules, there are four virtual antenna ports, and the mapping, by the BBU, a virtual antenna port of the BBU to a physical antenna port in the antenna system based on the architecture information of the antenna system and the virtual antenna port includes: mapping, by the BBU, a virtual antenna port 0 in the four virtual antenna ports to a first physical antenna port of a first antenna module in the two antenna modules and a first physical antenna port of a second antenna module in the two antenna modules by using a weighted value [1, 1], mapping a virtual antenna port 1 in the four virtual antenna ports to a second physical antenna port of the first antenna module in the two antenna modules and a second physical antenna port of the second antenna module in the two antenna modules by using a weighted value [1, 1], mapping a virtual antenna port 2 in the four virtual antenna ports to a third physical antenna port of the first antenna module in the two antenna modules and a third physical antenna port of the second antenna module in the two antenna modules by using a weighted value [1, 1], and mapping a virtual antenna port 3 in the four virtual antenna ports to a fourth physical antenna port of the first antenna module in the two antenna modules and a fourth physical antenna port of the second antenna module in the two antenna modules by using a weighted value [1, 1].

In the possible design, when downtilt angles of vertical lobes of beams generated by a first antenna array and a second antenna array in each of the two antenna modules are the same, combined beams generated by the two antenna modules are both vertical-dimension narrow beams, and the two narrow beams may perform network coverage on different low-rise buildings or streets. When downtilt angles of vertical lobes of beams generated by a first antenna array and a second antenna array in each of the two antenna modules are different, combined beams generated by the two antenna modules are both vertical-dimension wide beams, and the two wide beams may perform network coverage on different high-rise buildings. When downtilt angles of vertical lobes of beams generated by a first antenna array and a second antenna array in one of the two antenna modules are the same, a combined beam generated by the antenna module is a vertical-dimension narrow beam, which may perform network coverage on a low-rise building or a street. When downtilt angles of vertical lobes of beams generated by a first antenna array and a second antenna array in the other one of the two antenna modules are different, a combined beam generated by the antenna module is a vertical-dimension wide beam, which may perform network coverage on a high-rise building.

In a possible design, when a downtilt angle of a vertical lobe of a beam generated by a first antenna array in an antenna module is the same as a downtilt angle of a vertical lobe of a beam generated by a second antenna array in the antenna module, the method further includes: compensating, by the BBU, for a phase difference between the beam generated by the first antenna array in the antenna module and the beam generated by the second antenna array.

In a possible design, the compensating for a phase difference between the beam generated by the first antenna array in the antenna module and the beam generated by the second antenna array includes: setting, by the BBU, a phase of the beam generated by the first antenna array in the antenna module and a phase of the beam generated by the second antenna array, where the phase of the beam generated by the first antenna array in the antenna module is 360^{∗}sin((ET-1)^{∗}15/14.4/180^{∗*π*})^{∗}330^{∗}Frq/300 greater than the phase of the beam generated by the second antenna array in the antenna module, ET is the downtilt angle of the vertical lobe of the beam generated by each of the first antenna array and the second antenna array in the antenna module, and Frq is a frequency of a transmitted signal of a physical antenna port.

According to a third aspect, a BBU is provided, and includes: an obtaining unit, configured to obtain architecture information of an antenna system, where the antenna system includes at least one antenna module, the antenna module includes a longitudinally-arranged first antenna array and a longitudinally-arranged second antenna array, and a downtilt angle of a vertical lobe of a beam generated by the first antenna array is the same as or different from a downtilt angle of a vertical lobe of a beam generated by the second antenna array; and a processing unit, configured to map a virtual antenna port of the BBU to a physical antenna port in the antenna system based on the architecture information of the antenna system and the virtual antenna port.

In a possible design, the first antenna array in the antenna module includes N1 longitudinally-arranged antenna array elements, the second antenna array in the antenna module includes N2 longitudinally-arranged antenna array elements, each antenna array element includes one positive-45-degree polarized array element and one negative-45-degree polarized array element, N1 positive-45-degree polarized array elements of the first antenna array correspond to a third physical antenna port, N1 negative-45-degree polarized array elements of the first antenna array correspond to a fourth physical antenna port, N2 positive-45-degree polarized array elements of the second antenna array correspond to a first physical antenna port, N2 negative-45-degree polarized array elements of the second antenna array correspond to a second physical antenna port, and both N1 and N2 are integers greater than 0.

In a possible design, the antenna system includes one antenna module, a downtilt angle of a vertical lobe of a beam generated by a first antenna array in the antenna module is the same as a downtilt angle of a vertical lobe of a beam generated by a second antenna array in the antenna module, there are two virtual antenna ports, and the processing unit is specifically configured to: map, by the BBU, a virtual antenna port 0 in the two virtual antenna ports to a first physical antenna port and a third physical antenna port in the antenna module by using a weighted value [1, 1], and map a virtual antenna port 1 in the two virtual antenna ports to a second physical antenna port and a fourth physical antenna port in the antenna module by using a weighted value [1, 1].

In a possible design, the antenna system includes one antenna module, a downtilt angle of a vertical lobe of a beam generated by a first antenna array in the antenna module is different from a downtilt angle of a vertical lobe of a beam generated by a second antenna array in the antenna module, there are two virtual antenna ports, and the processing unit is specifically configured to: map, by the BBU, a virtual antenna port 0 in the two virtual antenna ports to a first physical antenna port and a fourth physical antenna port in the antenna module by using a weighted value [1, 1], and map a virtual antenna port 1 in the two virtual antenna ports to a second physical antenna port and a third physical antenna port in the antenna module by using a weighted value [1, -1].

In a possible design, the antenna system includes one antenna module, there are four virtual antenna ports, and the processing unit is specifically configured to: map, by the BBU, a virtual antenna port 0 in the four virtual antenna ports to a first physical antenna port in the antenna module, map a virtual antenna port 1 in the four virtual antenna ports to a second physical antenna port in the antenna module, map a virtual antenna port 2 in the four virtual antenna ports to a third physical antenna port in the antenna module, and map a virtual antenna port 3 in the four virtual antenna ports to a fourth physical antenna port in the antenna module.

In a possible design, the antenna system includes two antenna modules, a downtilt angle of a vertical lobe of a beam generated by a first antenna array in each antenna module is the same as a downtilt angle of a vertical lobe of a beam generated by a second antenna array in the antenna module, there are two virtual antenna ports, and the processing unit is specifically configured to: map, by the BBU, a virtual antenna port 0 in the two virtual antenna ports to a first physical antenna port of a first antenna module in the two antenna modules, a third physical antenna port of the first antenna module, a first physical antenna port of a second antenna module in the two antenna modules, and a third physical antenna port of the second antenna module by using a weighted value [1, 1, 1, 1], and map a virtual antenna port 1 in the two virtual antenna ports to a second physical antenna port of the first antenna module in the two antenna modules, a fourth physical antenna port of the first antenna module, a second physical antenna port of the second antenna module in the two antenna modules, and a fourth physical antenna port of the second antenna module by using a weighted value [1, 1, 1, 1].

In a possible design, the antenna system includes two antenna modules, a downtilt angle of a vertical lobe of a beam generated by a first antenna array in each antenna module is different from a downtilt angle of a vertical lobe of a beam generated by a second antenna array in the antenna module, there are two virtual antenna ports, and the processing unit is specifically configured to: map, by the BBU, a virtual antenna port 0 in the two virtual antenna ports to a first physical antenna port of a first antenna module in the two antenna modules, a fourth physical antenna port of the first antenna module, a first physical antenna port of a second antenna module in the two antenna modules, and a fourth physical antenna port of the second antenna module by using a weighted value [1, 1, 1, 1], and map a virtual antenna port 1 in the two virtual antenna ports to a second physical antenna port of the first antenna module in the two antenna modules, a third physical antenna port of the first antenna module, a second physical antenna port of the second antenna module in the two antenna modules, and a third physical antenna port of the second antenna module by using a weighted value [-1, 1, -1, 1].

In a possible design, the antenna system includes two antenna modules, a downtilt angle of a vertical lobe of a beam generated by a first antenna array in a first antenna module in the two antenna modules is different from a downtilt angle of a vertical lobe of a beam generated by a second antenna array in the first antenna module, a downtilt angle of a vertical lobe of a beam generated by a first antenna array in a second antenna module in the two antenna modules is the same as a downtilt angle of a vertical lobe of a beam generated by a second antenna array in the second antenna module, there are two virtual antenna ports, and the processing unit is specifically configured to: map, by the BBU, a virtual antenna port 0 in the two virtual antenna ports to a first physical antenna port of the first antenna module in the two antenna modules, a fourth physical antenna port of the first antenna module, a first physical antenna port of the second antenna module in the two antenna modules, and a third physical antenna port of the second antenna module by using a weighted value [1, 1, 1, 1], and map a virtual antenna port 1 in the two virtual antenna ports to a second physical antenna port of the first antenna module in the two antenna modules, a third physical antenna port of the first antenna module, a second physical antenna port of the second antenna module in the two antenna modules, and a fourth physical antenna port of the second antenna module by using a weighted value [-1, 1, 1, 1].

In a possible design, the antenna system includes two antenna modules, there are four virtual antenna ports, and the processing unit is specifically configured to: map, by the BBU, a virtual antenna port 0 in the four virtual antenna ports to a first physical antenna port of a first antenna module in the two antenna modules and a first physical antenna port of a second antenna module in the two antenna modules by using a weighted value [1, 1], map a virtual antenna port 1 in the four virtual antenna ports to a second physical antenna port of the first antenna module in the two antenna modules and a second physical antenna port of the second antenna module in the two antenna modules by using a weighted value [1, 1], map a virtual antenna port 2 in the four virtual antenna ports to a third physical antenna port of the first antenna module in the two antenna modules and a third physical antenna port of the second antenna module in the two antenna modules by using a weighted value [1, 1], and map a virtual antenna port 3 in the four virtual antenna ports to a fourth physical antenna port of the first antenna module in the two antenna modules and a fourth physical antenna port of the second antenna module in the two antenna modules by using a weighted value [1, 1].

In a possible design, when a downtilt angle of a vertical lobe of a beam generated by a first antenna array in an antenna module is the same as a downtilt angle of a vertical lobe of a beam generated by a second antenna array in the antenna module, the processing unit is further configured to compensate for a phase difference between the beam generated by the first antenna array in the antenna module and the beam generated by the second antenna array.

In a possible design, the processing unit is specifically configured to set a phase of the beam generated by the first antenna array in the antenna module and a phase of the beam generated by the second antenna array, where the phase of the beam generated by the first antenna array in the antenna module is 360^{∗}sin((ET-1)^{∗}15/14.4/180^{∗*π*})^{∗}330^{∗}Frq/300 greater than the phase of the beam generated by the second antenna array in the antenna module, ET is the downtilt angle of the vertical lobe of the beam generated by each of the first antenna array and the second antenna array in the antenna module, and Frq is a frequency of a transmitted signal of a physical antenna port.

According to a fourth aspect, a BBU is provided, and includes a processor, a memory, a bus, and a communications interface. The memory is configured to store a computer execution instruction. The processor and the memory are connected through the bus. The processor executes the computer execution instruction stored by the memory, to implement any method provided in the first aspect.

For a technical effect brought by any one of the design manners in the third aspect and the fourth aspect, refer to technical effects brought by the different design manners in the first aspect. Details are not repeatedly described herein.

According to a fifth aspect, a computer storage medium is provided, and is configured to store a computer software instruction used by the BBU. The computer software instruction includes a program designed for performing any method provided in the first aspect.

### BRIEF DESCRIPTION OF DRAWINGS

FIG. 1 is a schematic composition diagram of an antenna system in the prior art;
FIG. 2 is a schematic composition diagram of another antenna system in the prior art;
FIG. 3 is a schematic composition diagram of a distributed base station according to an embodiment of the present invention;
FIG. 4 is a schematic composition diagram of a BBU according to an embodiment of the present invention;
FIG. 5 is a schematic composition diagram of an antenna system according to an embodiment of the present invention;
FIG. 6 is a schematic composition diagram of another antenna system according to an embodiment of the present invention;
FIG. 7 is a schematic diagram in which a beam generated by an antenna module covers a low-rise building according to an embodiment of the present invention;
FIG. 8 is a schematic diagram in which a beam generated by an antenna module covers a high-rise building according to an embodiment of the present invention;
FIG. 9 is a flowchart of a virtual antenna port mapping method according to an embodiment of the present invention;
FIG. 10 is a schematic diagram of mapping a virtual antenna port to a physical antenna port according to an embodiment of the present invention;
FIG. 11 is another schematic diagram of mapping a virtual antenna port to a physical antenna port according to an embodiment of the present invention;
FIG. 12 is another schematic diagram of mapping a virtual antenna port to a physical antenna port according to an embodiment of the present invention;
FIG. 13 is another schematic diagram of mapping a virtual antenna port to a physical antenna port according to an embodiment of the present invention;
FIG. 14 is a schematic diagram in which two antenna modules perform network coverage on different low-rise buildings according to an embodiment of the present invention;
FIG. 15 is another schematic diagram of mapping a virtual antenna port to a physical antenna port according to an embodiment of the present invention;
FIG. 16 is a schematic diagram in which two antenna modules perform network coverage on different high-rise buildings according to an embodiment of the present invention;
FIG. 17 is another schematic diagram of mapping a virtual antenna port to a physical antenna port according to an embodiment of the present invention;
FIG. 18 is a schematic diagram in which two antenna modules respectively perform network coverage on a high-rise building and a low-rise building according to an embodiment of the present invention;
FIG. 19 is another schematic diagram of mapping a virtual antenna port to a physical antenna port according to an embodiment of the present invention;
FIG. 20 is a schematic composition diagram of a BBU according to an embodiment of the present invention; and
FIG. 21 is a schematic composition diagram of another BBU according to an embodiment of the present invention.

### DESCRIPTION OF EMBODIMENTS

Solutions provided in the embodiments of the present invention are described in detail below by using specific embodiments.

"First" and "second" in a first antenna module and a second antenna module in the following descriptions of the embodiments of the present invention may indicate any antenna module, and are not in a particular sense, but are merely intended to distinguish between two antenna modules. Similarly, "first" and "second" in a first antenna array and a second antenna array are merely intended to distinguish between two antenna arrays. "First", "second", "third", and "fourth" in other descriptions are also for distinguishing.

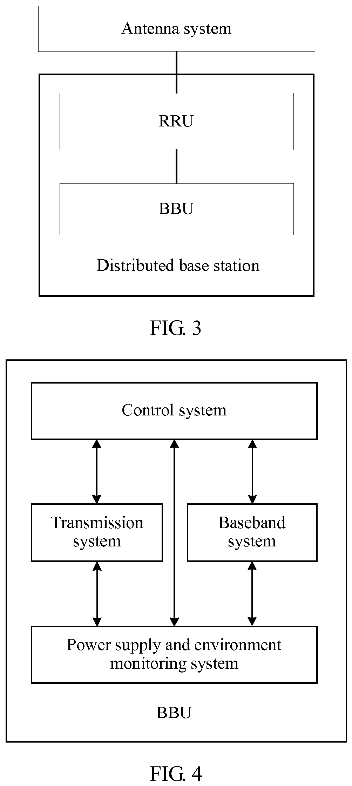

A method provided in the embodiments of the present invention may be applied to a distributed base station. As shown in FIG. 3, the distributed base station includes a BBU and an RRU connected to the BBU through an optical fiber, the RRU is connected to an antenna system through a feeder, and the antenna system sends (or receives) information by transmitting (or receiving) an electromagnetic wave. The BBU is configured to complete functions such as baseband signal processing, transmission, main control, and a clock. The RRU is configured to: filter, amplify, and up- or down-convert a radio frequency signal, and convert an intermediate frequency analog signal to a baseband digital signal by using a digital intermediate frequency technology. Specifically, alternatively, the RRU may be integrated with the antenna system to form an active antenna unit (Active Antenna Unit, AAU for short), to meet basic requirements that a base station site is available anywhere at any time and that the AAU is environmentally friendly and is easily to be deployed.

As shown in FIG. 4, the BBU usually includes a control system, a power supply and environment monitoring system connected to the control system, a transmission system and a baseband system that are connected to both the control system and the power supply and environment monitoring system, and the like. The control system is configured to: manage the entire distributed base station, where the management includes operation maintenance and signaling processing; and provide a system clock. The power supply and environment monitoring system is configured to convert a power supply and provide an external monitoring interface. The transmission system is configured to transmit information exchanged between the control system and the power supply and environment monitoring system. The baseband system is configured to complete an uplink and downlink data baseband processing function.

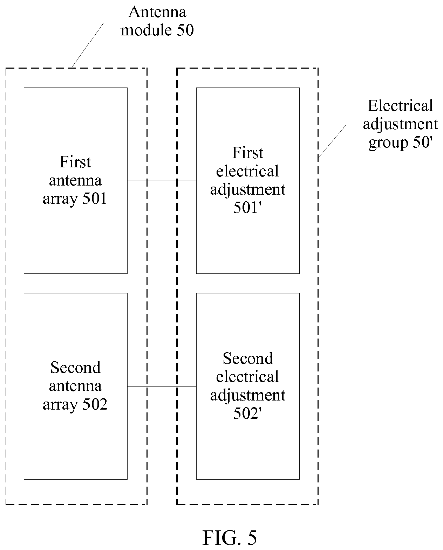

Based on a problem existing in the prior art, an embodiment of the present invention provides an antenna system. The antenna system includes:
at least one antenna module 50, as shown in FIG. 5, where the antenna module 50 includes a longitudinally-arranged first antenna array 501 and a longitudinally-arranged second antenna array 502; and
at least one electrical adjustment group 50' in a one-to-one correspondence with the at least one antenna module 50, as shown in FIG. 5, where the electrical adjustment group 50' includes a first electrical adjustment 501' and a second electrical adjustment 502'; the first electrical adjustment 501' in the electrical adjustment group 50' corresponding to each antenna module 50 is connected to the first antenna array 501 in the antenna module 50, and is configured to adjust a downtilt angle of a vertical lobe of a beam generated by the first antenna array 501 in the antenna module 50; and the second electrical adjustment 502' in the electrical adjustment group 50' corresponding to each antenna module 50 is connected to the second antenna array 502 in the antenna module 50, and is configured to adjust a downtilt angle of a vertical lobe of a beam generated by the second antenna array 502 in the antenna module 50.

Electrical adjustments in an electrical adjustment group corresponding to an antenna module may adjust downtilt angles of vertical lobes of beams generated by two antenna arrays in the antenna module, where the downtilt angle of the vertical lobe of the beam is an included angle between a direction of the beam and a horizontal line; and therefore may adjust directions of the beams generated by the two antenna arrays, so that the beams generated by the two antenna arrays jointly form a vertical-dimension wide beam or a vertical-dimension narrow beam. For ease of description, in the following description, the beam jointly formed by the two beams generated by the two antenna arrays in the antenna module is referred to as a "combined beam" of the antenna module.

Specifically, when the downtilt angles of the vertical lobes of the two beams generated by the two antenna arrays in the antenna module are the same, the combined beam of the antenna module is a vertical-dimension narrow beam. When the downtilt angles of the vertical lobes of the two beams generated by the two antenna arrays in the antenna module are different, the combined beam of the antenna module is a vertical-dimension wide beam. A larger difference between the downtilt angles of the vertical lobes of the beams generated by the two antenna arrays indicates a greater width of the combined beam in a vertical dimension.

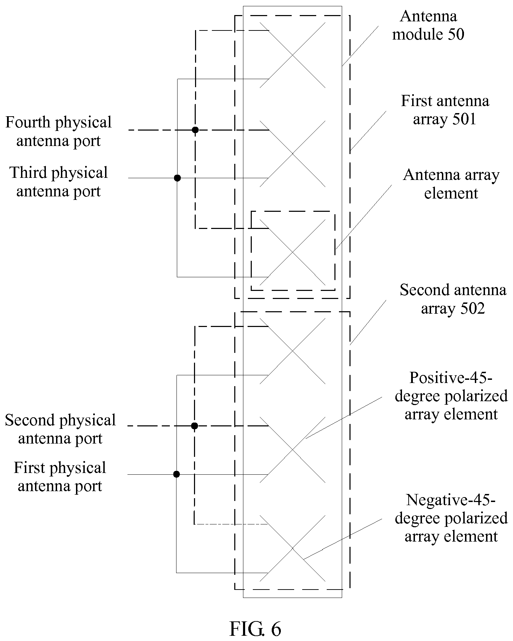

Optionally, as shown in FIG. 6, the first antenna array in the antenna module includes N1 longitudinally-arranged antenna array elements, the second antenna array in the antenna module includes N2 longitudinally-arranged antenna array elements, each antenna array element includes one positive-45-degree polarized array element and one negative-45-degree polarized array element, N1 positive-45-degree polarized array elements of the first antenna array correspond to a third physical antenna port, N1 negative-45-degree polarized array elements of the first antenna array correspond to a fourth physical antenna port, N2 positive-45-degree polarized array elements of the second antenna array correspond to a first physical antenna port, N2 negative-45-degree polarized array elements of the second antenna array correspond to a second physical antenna port, and both N1 and N2 are integers greater than 0. Usually, N1=N2. For example, N1=N2=3 is used for drawing in FIG. 6.

In addition, a sum of N1 and N2 is usually an even number greater than 0.

Each antenna module in the antenna system is connected to an RRU in a base station, and a quantity of antenna modules in the antenna system is usually set to 1 or 2. When there is one antenna module in the antenna system, the antenna system includes four physical antenna ports, where the quantity is greater than a quantity of physical antenna ports in the antenna system (namely, the antenna system provided in Manner 1 in the prior art) shown in FIG. 1. In this case, compared with the antenna system shown in FIG. 1, the antenna system provided in this embodiment of the present invention can meet a requirement of a network system for a higher capacity. When there are two antenna modules in the antenna system, the antenna system includes eight physical antenna ports, where the quantity is greater than a quantity of physical antenna ports in each of the antenna system shown in FIG. 1 and the antenna system (namely, the antenna system provided in Manner 2 in the prior art) shown in FIG. 2. In this case, compared with the antenna system shown in FIG. 1 and the antenna system shown in FIG. 2, the antenna system provided in this embodiment of the present invention can meet a requirement of a network system for a higher capacity.

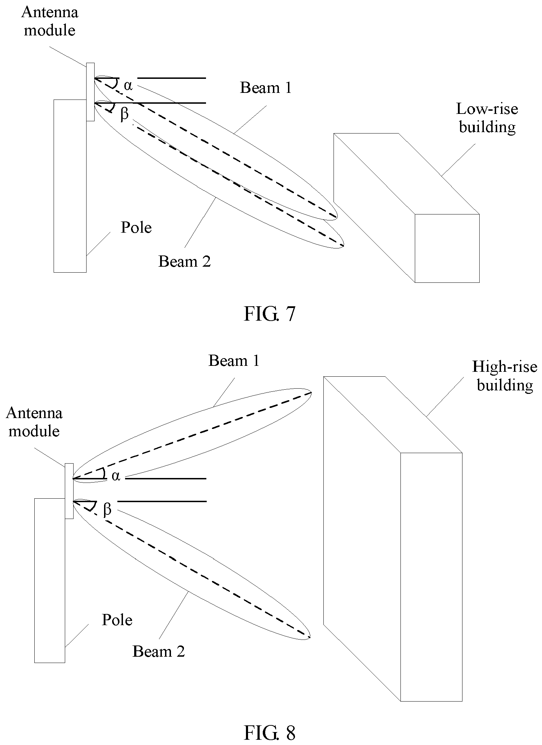

For example, as shown in FIG. 7 and FIG. 8, when the antenna system includes one antenna module, the antenna module is supported by a pole (for example, an electrical pole), a beam 1 indicates a beam generated by a first antenna array in the antenna module, α is a downtilt angle of a vertical lobe of the beam 1, a beam 2 indicates a beam generated by a second antenna array in the antenna module, and β is a downtilt angle of a vertical lobe of the beam 2. As shown in FIG. 7, when α and β are the same, a combined beam of the antenna module is a vertical-dimension narrow beam, and the narrow beam may be used to perform network coverage on a low-rise building and a street. As shown in FIG. 8, when α and β are different, a combined beam of the antenna module is a vertical-dimension wide beam, and the wide beam may be used to perform network coverage on a high-rise building.

It should be noted that when directions of the two beams are on upper and lower sides of a horizontal line, one of α and β is a positive value and the other one is a negative value.

The antenna system provided in this embodiment of the present invention includes at least two antenna arrays. Therefore, at least two beams can be generated, and directions of the two beams can be controlled by using an electrical adjustment, so that the two beams jointly form a vertical-dimension wide beam (or narrow beam), to implement network coverage on a high-rise building (or a low-rise building).

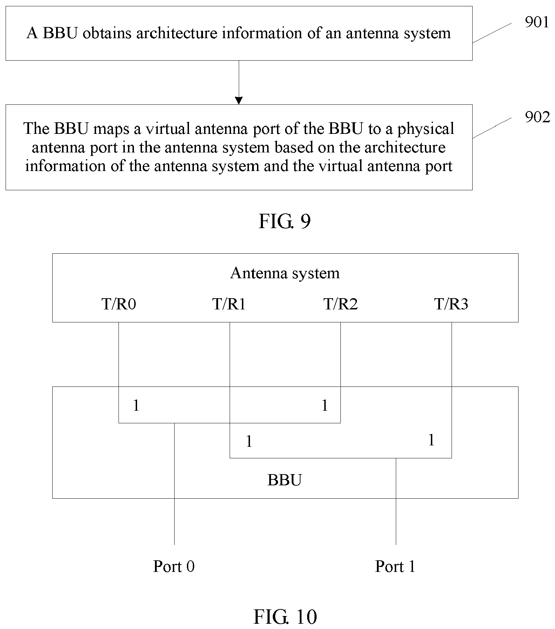

An embodiment of the present invention further provides a virtual antenna port mapping method. As shown in FIG. 9, the method includes the following steps.

901. A BBU obtains architecture information of an antenna system.

The antenna system includes at least one antenna module, the antenna module includes a longitudinally-arranged first antenna array and a longitudinally-arranged second antenna array, and a downtilt angle of a vertical lobe of a beam generated by the first antenna array is the same as or different from a downtilt angle of a vertical lobe of a beam generated by the second antenna array.

The method provided in this embodiment may be specifically performed by a baseband system in the BBU.

The architecture information of the antenna system may include any piece of information related to the antenna system, for example, a quantity of antenna modules included in the antenna system, a quantity and an arrangement manner of antenna arrays included in the antenna module, a quantity and an arrangement manner of antenna array elements included in the antenna array, a quantity of physical antenna ports, and a correspondence between a physical antenna port and a polarized array element.

When the antenna system is integrated with an RRU to form an AAU, the architecture information of the antenna system may be directly reported by the AAU to the BBU. When the antenna system is not integrated with an RRU, the architecture information of the antenna system may be reported by the antenna system to the RRU, and then be reported by the RRU to the BBU.

Specifically, the antenna system may include at least one electrical adjustment group in a one-to-one correspondence with the at least one antenna module. The electrical adjustment group includes a first electrical adjustment and a second electrical adjustment. The first electrical adjustment in the electrical adjustment group corresponding to each antenna module is connected to the first antenna array in the antenna module, and is configured to adjust a downtilt angle of a vertical lobe of a beam generated by the first antenna array in the antenna module. The second electrical adjustment in the electrical adjustment group corresponding to each antenna module is connected to the second antenna array in the antenna module, and is configured to adjust a downtilt angle of a vertical lobe of a beam generated by the second antenna array in the antenna module. Therefore, the electrical adjustments may be used to enable the downtilt angle of the vertical lobe of the beam generated by the first antenna array to be the same as or different from the downtilt angle of the vertical lobe of the beam generated by the second antenna array.

902. The BBU maps a virtual antenna port of the BBU to a physical antenna port in the antenna system based on the architecture information of the antenna system and the virtual antenna port.

Specifically, the BBU may map the virtual antenna port to the physical antenna port by using a virtual antenna mapping (Virtual Antenna Mapping, VAM for short) algorithm.

When downtilt angles of vertical lobes of beams generated by a first antenna array and a second antenna array in an antenna module are fixed, the virtual antenna port is mapped to the physical antenna port, so that each antenna module in the antenna system can generate one combined beam that has a specific shape, a specific beam width, and a specific antenna gain, to meet application requirements in different scenarios. For details, refer to the descriptions in FIG. 7 and FIG. 8. Specifically, a downtilt angle of a vertical lobe of a beam generated by an antenna array may be adjusted by adjusting an electrical adjustment corresponding to the antenna array.

According to the method provided in this embodiment of the present invention, the virtual antenna port may be mapped to the physical antenna port, so that the antenna module can generate the combined beam. Because the downtilt angles of the vertical lobes of the two beams that are generated by the two antenna arrays and that form the combined beam may be different, the combined beam may be a vertical-dimension wide beam, to implement network coverage on a high-rise building.

Optionally, the first antenna array in the antenna module includes N1 longitudinally-arranged antenna array elements, the second antenna array in the antenna module includes N2 longitudinally-arranged antenna array elements, each antenna array element includes one positive-45-degree polarized array element and one negative-45-degree polarized array element, N1 positive-45-degree polarized array elements of the first antenna array correspond to a third physical antenna port, N1 negative-45-degree polarized array elements of the first antenna array correspond to a fourth physical antenna port, N2 positive-45-degree polarized array elements of the second antenna array correspond to a first physical antenna port, N2 negative-45-degree polarized array elements of the second antenna array correspond to a second physical antenna port, and both N1 and N2 are integers greater than 0.

Specific implementations of step 902 are different when quantities of antenna modules included in the antenna system are different, when the downtilt angles of the vertical lobes of the beams generated by the first antenna array and the second antenna array in the antenna module are different, and when quantities of virtual antenna ports are different. Different cases are separately illustrated below.

Case 1: The antenna system includes one antenna module, downtilt angles of vertical lobes of beams generated by a first antenna array and a second antenna array in the antenna module are the same, and there are two virtual antenna ports.

During specific implementation, step 902 may be as follows: The BBU maps a virtual antenna port 0 in the two virtual antenna ports to a first physical antenna port and a third physical antenna port in the antenna module by using a weighted value [1, 1], and maps a virtual antenna port 1 in the two virtual antenna ports to a second physical antenna port and a fourth physical antenna port in the antenna module by using a weighted value [1, 1].

In this embodiment of the present invention, for ease of description, the first physical antenna port is denoted as T/R0, the second physical antenna port is denoted as T/R1, the third physical antenna port is denoted as T/R2, the fourth physical antenna port is denoted as T/R3, the virtual antenna port 0 is a port 0, the virtual antenna port 1 is a port 1, a virtual antenna port 2 mentioned below is a port 2, and a virtual antenna port 3 is a port 3.

For example, FIG. 10 is a schematic diagram of mapping a virtual antenna port to a physical antenna port in Case 1. The BBU maps a port 0 to T/R0 and T/R2 by using a weighted value [1, 1], and maps a port 1 to T/R1 and T/R3 by using a weighted value [1, 1].

In this case, a combined beam of the antenna module is a vertical-dimension narrow beam similar to that shown in FIG. 7, and the narrow beam may perform network coverage on a low-rise building and a street.

Case 2: The antenna system includes one antenna module, downtilt angles of vertical lobes of beams generated by a first antenna array and a second antenna array in the antenna module are different, and there are two virtual antenna ports.

During specific implementation, step 902 may be as follows: The BBU maps a virtual antenna port 0 in the two virtual antenna ports to a first physical antenna port and a fourth physical antenna port in the antenna module by using a weighted value [1, 1], and maps a virtual antenna port 1 in the two virtual antenna ports to a second physical antenna port and a third physical antenna port in the antenna module by using a weighted value [1, -1].

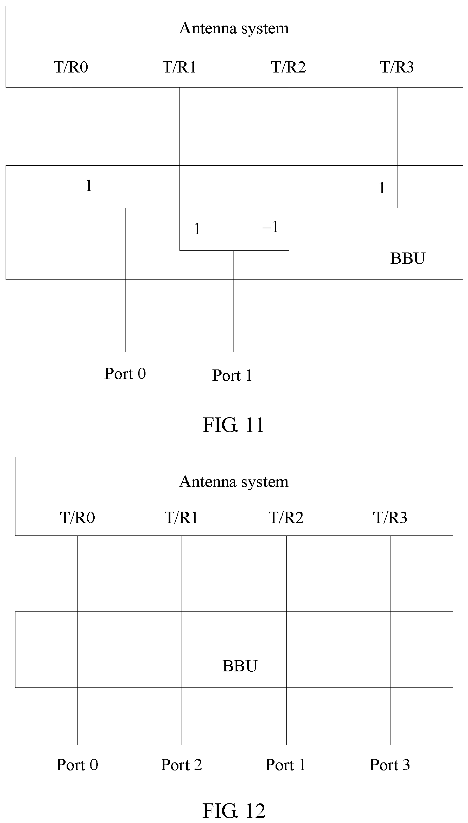

For example, FIG. 11 is a schematic diagram of mapping a virtual antenna port to a physical antenna port in Case 2. The BBU maps a port 0 to T/R0 and T/R3 by using a weighted value [1, 1], and maps a port 1 to T/R1 and T/R2 by using a weighted value [1, -1].

In this case, a combined beam of the antenna module is a vertical-dimension wide beam similar to that shown in FIG. 8, and the wide beam may perform network coverage on a high-rise building.

Case 3: The antenna system includes one antenna module, and there are four virtual antenna ports.

During specific implementation, step 902 may be as follows: The BBU maps a virtual antenna port 0 in the four virtual antenna ports to a first physical antenna port in the antenna module, maps a virtual antenna port 1 in the four virtual antenna ports to a second physical antenna port in the antenna module, maps a virtual antenna port 2 in the four virtual antenna ports to a third physical antenna port in the antenna module, and maps a virtual antenna port 3 in the four virtual antenna ports to a fourth physical antenna port in the antenna module.

For example, FIG. 12 is a schematic diagram of mapping a virtual antenna port to a physical antenna port in Case 3. The BBU maps a port 0 to T/R0, maps a port 2 to T/R1, maps a port 1 to T/R2, and maps a port 3 to T/R3.

In this case, when downtilt angles of vertical lobes of beams generated by a first antenna array and a second antenna array in the antenna module are the same, a combined beam of the antenna module is a vertical-dimension narrow beam similar to that shown in FIG. 7, and the narrow beam may perform network coverage on a low-rise building and a street. When downtilt angles of vertical lobes of beams generated by a first antenna array and a second antenna array in the antenna module are different, a combined beam of the antenna module is a vertical-dimension wide beam similar to that shown in FIG. 8, and the wide beam may perform network coverage on a high-rise building.

Case 4: The antenna system includes two antenna modules, downtilt angles of vertical lobes of beams generated by a first antenna array and a second antenna array in each antenna module are the same, and there are two virtual antenna ports.

During specific implementation, step 902 may be as follows: The BBU maps a virtual antenna port 0 in the two virtual antenna ports to a first physical antenna port of a first antenna module in the two antenna modules, a third physical antenna port of the first antenna module, a first physical antenna port of a second antenna module in the two antenna modules, and a third physical antenna port of the second antenna module by using a weighted value [1, 1, 1, 1], and maps a virtual antenna port 1 in the two virtual antenna ports to a second physical antenna port of the first antenna module in the two antenna modules, a fourth physical antenna port of the first antenna module, a second physical antenna port of the second antenna module in the two antenna modules, and a fourth physical antenna port of the second antenna module by using a weighted value [1, 1, 1, 1].

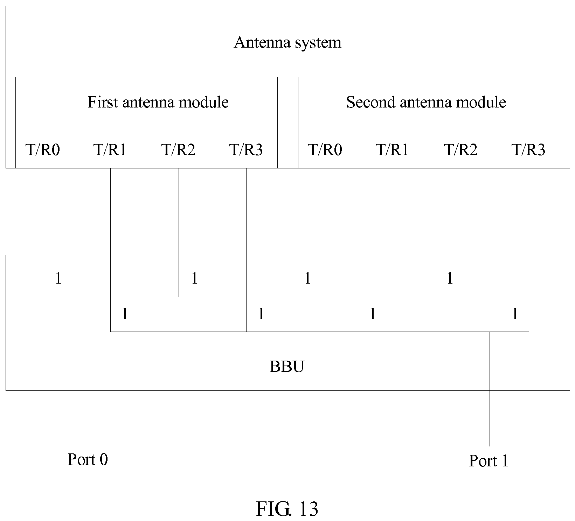

For example, FIG. 13 is a schematic diagram of mapping a virtual antenna port to a physical antenna port in Case 4. The BBU maps a port 0 to T/R0 and T/R2 of a first antenna module and T/R0 and T/R2 of a second antenna module by using a weighted value [1, 1, 1, 1], and maps a port 1 to T/R1 and T/R3 of the first antenna module and T/R1 and T/R3 of the second antenna module by using a weighted value [1, 1, 1, 1].

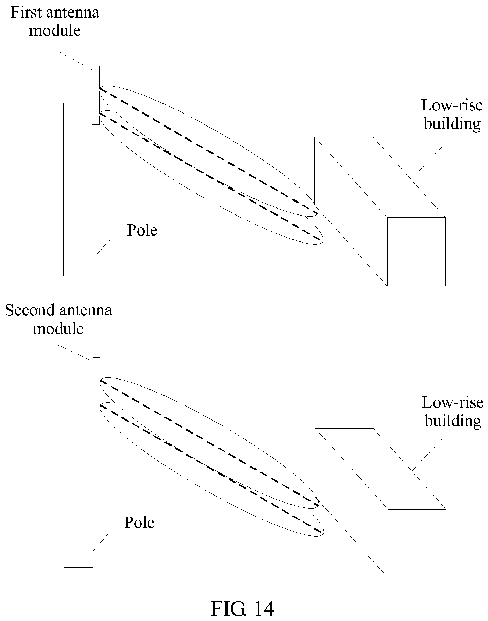

In this case, as shown in FIG. 14, a combined beam of the first antenna module and a combined beam of the second antenna module are both vertical-dimension narrow beams, and the two narrow beams may perform network coverage on different low-rise buildings or streets.

Case 5: The antenna system includes two antenna modules, downtilt angles of vertical lobes of beams generated by a first antenna array and a second antenna array in each antenna module are different, and there are two virtual antenna ports.

During specific implementation, step 902 may be as follows: The BBU maps a virtual antenna port 0 in the two virtual antenna ports to a first physical antenna port of a first antenna module in the two antenna modules, a fourth physical antenna port of the first antenna module, a first physical antenna port of a second antenna module in the two antenna modules, and a fourth physical antenna port of the second antenna module by using a weighted value [1, 1, 1, 1], and maps a virtual antenna port 1 in the two virtual antenna ports to a second physical antenna port of the first antenna module in the two antenna modules, a third physical antenna port of the first antenna module, a second physical antenna port of the second antenna module in the two antenna modules, and a third physical antenna port of the second antenna module by using a weighted value [-1, 1, -1, 1].

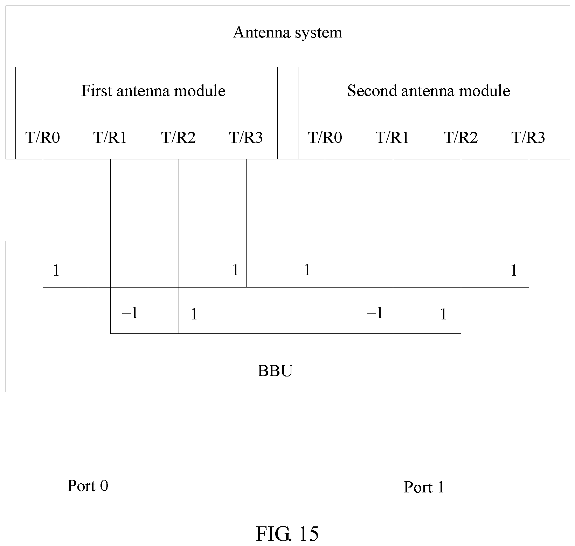

For example, FIG. 15 is a schematic diagram of mapping a virtual antenna port to a physical antenna port in Case 5. The BBU maps a port 0 to T/R0 and T/R3 of a first antenna module and T/R0 and T/R3 of a second antenna module by using a weighted value [1, 1, 1, 1], and maps a port 1 to T/R1 and T/R2 of the first antenna module and T/R1 and T/R2 of the second antenna module by using a weighted value [-1, 1, -1, 1].

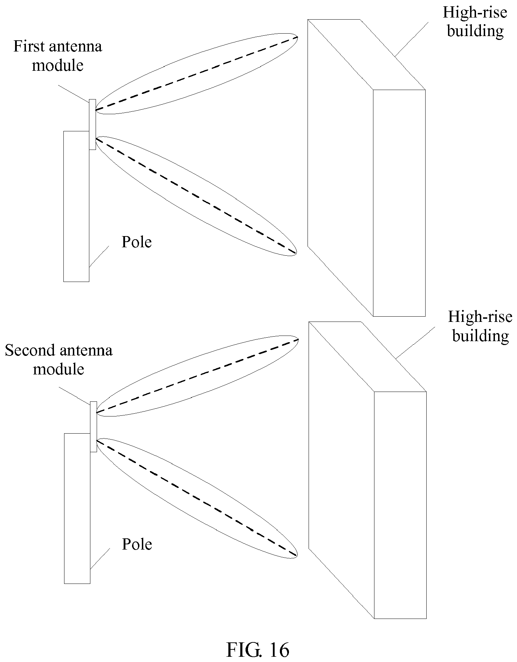

In this case, as shown in FIG. 16, a combined beam of the first antenna module and a combined beam of the second antenna module are both vertical-dimension wide beams, and the two wide beams may perform network coverage on different high-rise buildings.

Case 6: The antenna system includes two antenna modules, downtilt angles of vertical lobes of beams generated by a first antenna array and a second antenna array in a first antenna module in the two antenna modules are different, downtilt angles of vertical lobes of beams generated by a first antenna array and a second antenna array in a second antenna module in the two antenna modules are the same, and there are two virtual antenna ports.

During specific implementation, step 902 may be as follows: The BBU maps a virtual antenna port 0 in the two virtual antenna ports to a first physical antenna port of a first antenna module in the two antenna modules, a fourth physical antenna port of the first antenna module, a first physical antenna port of a second antenna module in the two antenna modules, and a third physical antenna port of the second antenna module by using a weighted value [1, 1, 1, 1], and maps a virtual antenna port 1 in the two virtual antenna ports to a second physical antenna port of the first antenna module in the two antenna modules, a third physical antenna port of the first antenna module, a second physical antenna port of the second antenna module in the two antenna modules, and a fourth physical antenna port of the second antenna module by using a weighted value [-1, 1, 1, 1].

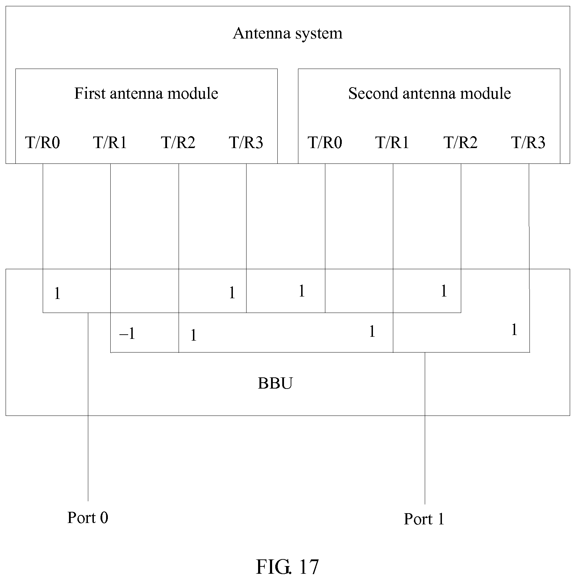

For example, FIG. 17 is a schematic diagram of mapping a virtual antenna port to a physical antenna port in Case 6. The BBU maps a port 0 to T/R0 and T/R3 of a first antenna module and T/R0 and T/R2 of a second antenna module by using a weighted value [1, 1, 1, 1], and maps a port 1 to T/R1 and T/R2 of the first antenna module and T/R1 and T/R3 of the second antenna module by using a weighted value [-1, 1, 1, 1].

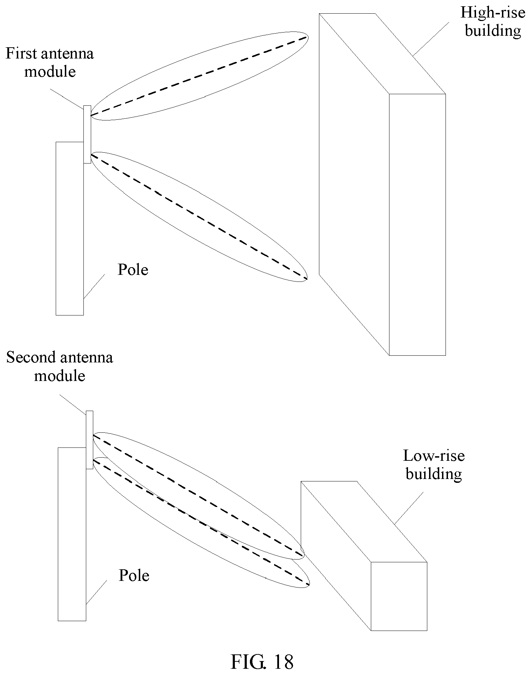

In this case, as shown in FIG. 18, a combined beam of the first antenna module is a vertical-dimension wide beam, and the wide beam may perform network coverage on a high-rise building; and a combined beam of the second antenna module is a vertical-dimension narrow beam, and the narrow beam may perform network coverage on a low-rise building and a street.

Case 7: The antenna system includes two antenna modules, and there are four virtual antenna ports.

During specific implementation, step 902 may be as follows: The BBU maps a virtual antenna port 0 in the four virtual antenna ports to a first physical antenna port of a first antenna module in the two antenna modules and a first physical antenna port of a second antenna module in the two antenna modules by using a weighted value [1, 1], maps a virtual antenna port 1 in the four virtual antenna ports to a second physical antenna port of the first antenna module in the two antenna modules and a second physical antenna port of the second antenna module in the two antenna modules by using a weighted value [1, 1], maps a virtual antenna port 2 in the four virtual antenna ports to a third physical antenna port of the first antenna module in the two antenna modules and a third physical antenna port of the second antenna module in the two antenna modules by using a weighted value [1, 1], and maps a virtual antenna port 3 in the four virtual antenna ports to a fourth physical antenna port of the first antenna module in the two antenna modules and a fourth physical antenna port of the second antenna module in the two antenna modules by using a weighted value [1, 1].

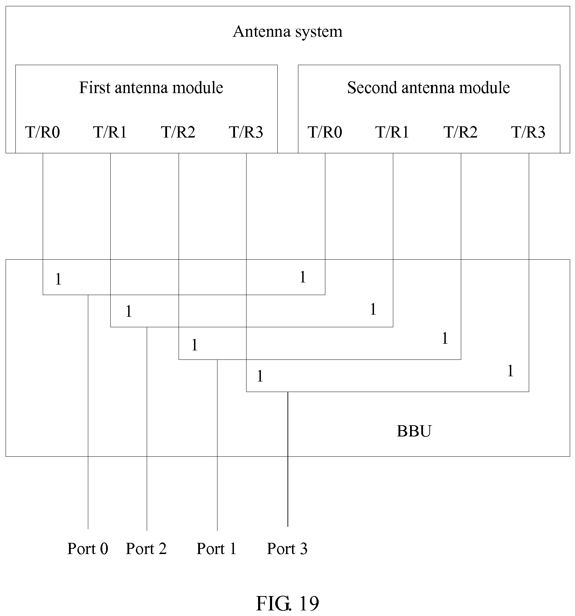

For example, FIG. 19 is a schematic diagram of mapping a virtual antenna port to a physical antenna port in case 7. The BBU maps a port 0 to T/R0 of a first antenna module and T/R0 of a second antenna module by using a weighted value [1, 1], maps a port 1 to T/R2 of the first antenna module and T/R2 of the second antenna module by using a weighted value [1, 1], maps a port 2 to T/R1 of the first antenna module and T/R1 of the second antenna module by using a weighted value [1, 1], and maps a port 3 to T/R3 of the first antenna module and T/R3 of the second antenna module by using a weighted value [1, 1].

In this case, when downtilt angles of vertical lobes of beams generated by a first antenna array and a second antenna array in each of the two antenna modules are the same, combined beams generated by the two antenna modules are both vertical-dimension narrow beams, and the two narrow beams may perform network coverage on different low-rise buildings or streets. For details, refer to FIG. 14.

When downtilt angles of vertical lobes of beams generated by a first antenna array and a second antenna array in each of the two antenna modules are different, combined beams generated by the two antenna modules are both vertical-dimension wide beams, and the two wide beams may perform network coverage on different high-rise buildings. For details, refer to FIG. 16.

When downtilt angles of vertical lobes of beams generated by a first antenna array and a second antenna array in one of the two antenna modules are the same, a combined beam generated by the antenna module is a vertical-dimension narrow beam, which may perform network coverage on a low-rise building or a street. When downtilt angles of vertical lobes of beams generated by a first antenna array and a second antenna array in the other one of the two antenna modules are different, a combined beam generated by the antenna module is a vertical-dimension wide beam, which may perform network coverage on a high-rise building. For details, refer to FIG. 18.

According to the foregoing method provided in this embodiment of the present invention, when the virtual antenna port is mapped to the physical antenna port, coherent superposition is not generated between beams generated by a first antenna array and a second antenna array in an antenna module, so that a combined beam generated by the antenna module has a better coverage effect.

In the foregoing cases, optionally, when a downtilt angle of a vertical lobe of a beam generated by a first antenna array in an antenna module is the same as a downtilt angle of a vertical lobe of a beam generated by a second antenna array in the antenna module, the method further includes: compensating, by the BBU, for a phase difference between the beam generated by the first antenna array in the antenna module and the beam generated by the second antenna array. An effect of combining the beams generated by the two antenna arrays in the antenna module can be improved by compensating for the phase difference.

A specific compensation method may be: setting a phase of the beam generated by the first antenna array in the antenna module and a phase of the beam generated by the second antenna array, where the phase of the beam generated by the first antenna array in the antenna module is 360^{∗}sin((ET-1)^{∗}15/14.4/180^{∗*π*})^{∗}330^{∗}Frq/300 greater than the phase of the beam generated by the second antenna array in the antenna module, ET is the downtilt angle of the vertical lobe of the beam generated by each of the first antenna array and the second antenna array in the antenna module, Frq is a frequency of a transmitted signal of a physical antenna port, and "^{∗}" indicates "multiply".

Specifically, referring to FIG. 7, when the downtilt angle α of the vertical lobe of the beam generated by the first antenna array is the same as the downtilt angle β of the vertical lobe of the beam generated by the second antenna array, the beam 1 generated by the first antenna array and the beam 2 generated by the second antenna array jointly form a vertical-dimension narrow beam. There is a phase difference between the beam 1 and the beam 2. To ensure a combination effect of the beam 1 and the beam 2, the BBU needs to compensate for the phase difference between the beam 1 and the beam 2. Specifically, the compensation may be implemented by enabling a phase of the beam generated by the first antenna array to be 360^{∗}sin((ET-1)^{∗}15/14.4/180^{∗*π*})^{∗}330^{∗}Frq/300 greater than a phase of the beam generated by the second antenna array.

For example, when the downtilt angle of the vertical lobe of the beam generated by the first antenna array and the downtilt angle of the vertical lobe of the beam generated by the second antenna array each are 15 degrees, and the frequency of the transmitted signal of the physical antenna port is 2.2 GHz, the phase of the beam generated by the first antenna array may be set to 0, and the phase of the beam generated by the second antenna array may be set to -219.3576 degrees.

In addition, in the foregoing method, two beams generated by one antenna module may cover one cell with four channels, or may cover two inter-frequency cells with two channels.

A network throughput can be effectively increased by implementing network coverage in different scenarios by using the vertical-dimension narrow beam and the vertical-dimension wide beam generated by the antenna system in this embodiment of the present invention. Table 1 shows increments, obtained through simulation, in network throughputs in different scenarios in which an AAU is EM 1.0 (Easy Macro 1.0) and EM 2.0 (Easy Macro 2.0). EM 1.0 implements network coverage in Manner 1 in the prior art, and the AAU, in the present invention, obtained by integrating the RRU with the antenna system is denoted as EM 2.0.

**Table 1**

| Comparison item | | Scenario 1 | | Scenario 2 | | Scenario 3 | | Remarks |
|---|---|---|---|---|---|---|---|---|
| | | Average | Edge | Average | Edge | Average | Edge | |
| EM 1.0 | | 1.00 | 1.00 | 1.00 | 1.00 | 1.00 | 1.00 | Transmission mode 3 |
| EM 2.0-SU | DL | 8% | 16% | 12% | 24% | 10% | 33% | Transmission mode 3/4/7 |
| | UL | 40% | 60% | 45% | 82% | 22% | 65% | |
| EM | DL | / | / | / | / | 50% | 35% | Transmission |
| 2.0-MU | UL | / | / | / | / | 45% | 65% | mode 7/8 |

EM 2.0-SU indicates a single-user scenario, EM 2.0-MU indicates a multi-user scenario, DL indicates a downlink, and UL indicates an uplink. Scenario 1 is a scenario of covering a street and a one- and two-rise building along the street, Scenario 2 is a scenario of covering a four- to eight-rise building within a range of 200 meters along a street, and Scenario 3 is a scenario of covering a mid- or high-rise building (with a building height of 60 meters). It can be seen from Table 1 that, in street station scenarios (including Scenario 1 and Scenario 2), compared with EM 1.0, in EM 2.0, a downlink average throughput is increased by 8% to 12%, a downlink edge throughput is increased by 16% to 24%, an uplink average throughput is increased by 40% to 45%, and an uplink edge throughput is increased by 60% to 82%. In a mid- or high-rise building scenario (Scenario 3), compared with EM 1.0, in EM 2.0, a downlink average throughput is increased by 10% to 50%, a downlink edge throughput is increased by 33% to 35%, an uplink average throughput is increased by 22% to 45%, and an uplink edge throughput is increased by 65%.

The solutions provided in the embodiments of the present invention are described mainly from a perspective of an execution process of the steps in the method in the foregoing embodiment. It may be understood that, to implement the foregoing method, the BBU includes a corresponding hardware structure and/or a software unit for performing the steps in the method. A person skilled in the art should be easily aware that, units and algorithm steps in the examples described with reference to the embodiments disclosed in this specification can be implemented by hardware or a combination of hardware and computer software in the present invention. Whether a function is specifically performed by hardware or hardware driven by computer software depends on particular applications and design constraints of the technical solutions. A person skilled in the art may use different methods to implement the described functions for each particular application, but it should not be considered that the implementation goes beyond the scope of the present invention.

In the embodiments of the present invention, the BBU may be divided into functional units according to the foregoing method embodiment. For example, each functional unit may be obtained through division based on each corresponding method step, or two or more functional units may be integrated into one processing unit. The integrated unit may be implemented in a form of hardware, or may be implemented in a form of a software functional unit. It should be noted that unit division in the embodiments of the present invention is an example, and is merely logical function division. There may be another division manner during actual implementation.

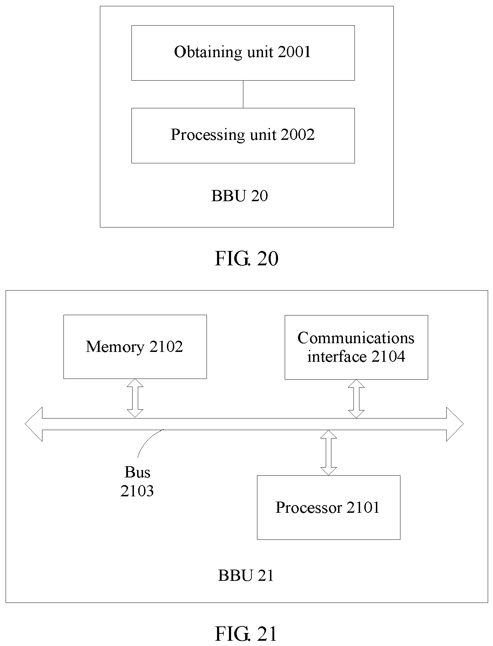

For example, FIG. 20 is a schematic composition diagram of a BBU 20. The BBU 20 includes:
an obtaining unit 2001, configured to obtain architecture information of an antenna system, where the antenna system includes at least one antenna module, the antenna module includes a longitudinally-arranged first antenna array and a longitudinally-arranged second antenna array, and a downtilt angle of a vertical lobe of a beam generated by the first antenna array is the same as or different from a downtilt angle of a vertical lobe of a beam generated by the second antenna array; and
a processing unit 2002, configured to map a virtual antenna port of the BBU to a physical antenna port in the antenna system based on the architecture information of the antenna system and the virtual antenna port.

Optionally, the first antenna array in the antenna module includes N1 longitudinally-arranged antenna array elements, the second antenna array in the antenna module includes N2 longitudinally-arranged antenna array elements, each antenna array element includes one positive-45-degree polarized array element and one negative-45-degree polarized array element, N1 positive-45-degree polarized array elements of the first antenna array correspond to a third physical antenna port, N1 negative-45-degree polarized array elements of the first antenna array correspond to a fourth physical antenna port, N2 positive-45-degree polarized array elements of the second antenna array correspond to a first physical antenna port, N2 negative-45-degree polarized array elements of the second antenna array correspond to a second physical antenna port, and both N1 and N2 are integers greater than 0.

Optionally, the antenna system includes one antenna module, a downtilt angle of a vertical lobe of a beam generated by a first antenna array in the antenna module is the same as a downtilt angle of a vertical lobe of a beam generated by a second antenna array in the antenna module, there are two virtual antenna ports, and the processing unit 2002 is specifically configured to:
map, by the BBU, a virtual antenna port 0 in the two virtual antenna ports to a first physical antenna port and a third physical antenna port in the antenna module by using a weighted value [1, 1], and map a virtual antenna port 1 in the two virtual antenna ports to a second physical antenna port and a fourth physical antenna port in the antenna module by using a weighted value [1, 1].

Optionally, the antenna system includes one antenna module, a downtilt angle of a vertical lobe of a beam generated by a first antenna array in the antenna module is different from a downtilt angle of a vertical lobe of a beam generated by a second antenna array in the antenna module, there are two virtual antenna ports, and the processing unit 2002 is specifically configured to:
map, by the BBU, a virtual antenna port 0 in the two virtual antenna ports to a first physical antenna port and a fourth physical antenna port in the antenna module by using a weighted value [1, 1], and map a virtual antenna port 1 in the two virtual antenna ports to a second physical antenna port and a third physical antenna port in the antenna module by using a weighted value [1, -1].

Optionally, the antenna system includes one antenna module, there are four virtual antenna ports, and the processing unit 2002 is specifically configured to:
map, by the BBU, a virtual antenna port 0 in the four virtual antenna ports to a first physical antenna port in the antenna module, map a virtual antenna port 1 in the four virtual antenna ports to a second physical antenna port in the antenna module, map a virtual antenna port 2 in the four virtual antenna ports to a third physical antenna port in the antenna module, and map a virtual antenna port 3 in the four virtual antenna ports to a fourth physical antenna port in the antenna module.

Optionally, the antenna system includes two antenna modules, a downtilt angle of a vertical lobe of a beam generated by a first antenna array in each antenna module is the same as a downtilt angle of a vertical lobe of a beam generated by a second antenna array in the antenna module, there are two virtual antenna ports, and the processing unit 2002 is specifically configured to:
map, by the BBU, a virtual antenna port 0 in the two virtual antenna ports to a first physical antenna port of a first antenna module in the two antenna modules, a third physical antenna port of the first antenna module, a first physical antenna port of a second antenna module in the two antenna modules, and a third physical antenna port of the second antenna module by using a weighted value [1, 1, 1, 1], and map a virtual antenna port 1 in the two virtual antenna ports to a second physical antenna port of the first antenna module in the two antenna modules, a fourth physical antenna port of the first antenna module, a second physical antenna port of the second antenna module in the two antenna modules, and a fourth physical antenna port of the second antenna module by using a weighted value [1, 1, 1, 1].

Optionally, the antenna system includes two antenna modules, a downtilt angle of a vertical lobe of a beam generated by a first antenna array in each antenna module is different from a downtilt angle of a vertical lobe of a beam generated by a second antenna array in the antenna module, there are two virtual antenna ports, and the processing unit 2002 is specifically configured to:
map, by the BBU, a virtual antenna port 0 in the two virtual antenna ports to a first physical antenna port of a first antenna module in the two antenna modules, a fourth physical antenna port of the first antenna module, a first physical antenna port of a second antenna module in the two antenna modules, and a fourth physical antenna port of the second antenna module by using a weighted value [1, 1, 1, 1], and map a virtual antenna port 1 in the two virtual antenna ports to a second physical antenna port of the first antenna module in the two antenna modules, a third physical antenna port of the first antenna module, a second physical antenna port of the second antenna module in the two antenna modules, and a third physical antenna port of the second antenna module by using a weighted value [-1, 1, -1, 1].

Optionally, the antenna system includes two antenna modules, a downtilt angle of a vertical lobe of a beam generated by a first antenna array in a first antenna module in the two antenna modules is different from a downtilt angle of a vertical lobe of a beam generated by a second antenna array in the first antenna module, a downtilt angle of a vertical lobe of a beam generated by a first antenna array in a second antenna module in the two antenna modules is the same as a downtilt angle of a vertical lobe of a beam generated by a second antenna array in the second antenna module, there are two virtual antenna ports, and the processing unit 2002 is specifically configured to:
map, by the BBU, a virtual antenna port 0 in the two virtual antenna ports to a first physical antenna port of the first antenna module in the two antenna modules, a fourth physical antenna port of the first antenna module, a first physical antenna port of the second antenna module in the two antenna modules, and a third physical antenna port of the second antenna module by using a weighted value [1, 1, 1, 1], and map a virtual antenna port 1 in the two virtual antenna ports to a second physical antenna port of the first antenna module in the two antenna modules, a third physical antenna port of the first antenna module, a second physical antenna port of the second antenna module in the two antenna modules, and a fourth physical antenna port of the second antenna module by using a weighted value [-1, 1, 1, 1].

Optionally, the antenna system includes two antenna modules, there are four virtual antenna ports, and the processing unit 2002 is specifically configured to:
map, by the BBU, a virtual antenna port 0 in the four virtual antenna ports to a first physical antenna port of a first antenna module in the two antenna modules and a first physical antenna port of a second antenna module in the two antenna modules by using a weighted value [1, 1], map a virtual antenna port 1 in the four virtual antenna ports to a second physical antenna port of the first antenna module in the two antenna modules and a second physical antenna port of the second antenna module in the two antenna modules by using a weighted value [1, 1], map a virtual antenna port 2 in the four virtual antenna ports to a third physical antenna port of the first antenna module in the two antenna modules and a third physical antenna port of the second antenna module in the two antenna modules by using a weighted value [1, 1], and map a virtual antenna port 3 in the four virtual antenna ports to a fourth physical antenna port of the first antenna module in the two antenna modules and a fourth physical antenna port of the second antenna module in the two antenna modules by using a weighted value [1, 1].

Optionally, when a downtilt angle of a vertical lobe of a beam generated by a first antenna array in an antenna module is the same as a downtilt angle of a vertical lobe of a beam generated by a second antenna array in the antenna module, the processing unit 2002 is further configured to:
compensate for a phase difference between the beam generated by the first antenna array in the antenna module and the beam generated by the second antenna array.

Optionally, the processing unit 2002 is specifically configured to:
set a phase of the beam generated by the first antenna array in the antenna module and a phase of the beam generated by the second antenna array, where the phase of the beam generated by the first antenna array in the antenna module is 360^{∗}sin((ET-1)^{∗}15/14.4/180^{∗*π*})^{∗}330^{∗}Frq/300 greater than the phase of the beam generated by the second antenna array in the antenna module, ET is the downtilt angle of the vertical lobe of the beam generated by each of the first antenna array and the second antenna array in the antenna module, and Frq is a frequency of a transmitted signal of a physical antenna port.

Each unit in the BBU 20 is configured to perform the foregoing method. Therefore, for a beneficial effect of the BBU 20, refer to the beneficial effect of the foregoing method. Details are not described herein again.

Each "unit" described above may be an application-specific integrated circuit (application-specific integrated circuit, ASIC for short) circuit, a processor that executes one or more software or firmware programs, a memory, an integrated logic circuit, and/or another device that can provide the foregoing functions. Specifically, the obtaining unit 2001 may be implemented by using a communications interface or a receiver, and the processing unit 2002 may be implemented by a processor.

In a case, the foregoing method may be implemented by using a BBU 21 shown in FIG. 21. The BBU 21 includes a processor 2101, a memory 2102, a bus 2103, and a communications interface 2104.

The processor 2101 may be a general-purpose central processing unit (central processing unit, CPU for short), a microprocessor, an ASIC, or one or more integrated circuits for controlling program execution in the solutions of the present invention.

The memory 2102 may be a read-only memory (read-only memory, ROM for short) or another type of static storage device that can store static information and an instruction, or a random access memory (random access memory, RAM for short) or another type of dynamic storage device that can store information and an instruction, or may be an electrically erasable programmable read-only memory (electrically erasable programmable read-only memory, EEPROM for short), a compact disc read-only memory (compact disc read-only memory, CD-ROM for short) or other compact disc storage, optical disc storage (including a compact disc, a laser disc, an optical disc, a digital versatile disc, a Blu-ray disc, or the like), a disk storage medium or another magnetic storage device, or any other medium that can be configured to carry or store expected program code having an instruction or data structure form and that can be accessed by a computer. However, this is not limited thereto.

The communications interface 2104 may be an apparatus such as a transceiver, and is configured to communicate with another device.

The processor 2101, the memory 2102, and the communications interface 2104 are connected through the bus 2103. The bus 2103 may include a channel, and transmit information between the processor 2101, the memory 2102, and the communications interface 2104. The memory 2102 may exist independently and is connected to the processor 2101 through the bus 2103. The memory 2102 may alternatively be integrated with the processor 2101.

The bus 2103 may be a peripheral component interconnect (peripheral component interconnect, PCI for short) bus, an extended industry standard architecture (extended industry standard architecture, EISA for short) bus, or the like. The bus may be classified into an address bus, a data bus, a control bus, and the like. For ease of representation, only one thick line is used to represent the bus in FIG. 21, but it does not mean that there is only one bus or only one type of bus.

The memory 2102 is configured to store a computer execution instruction, and the processor 2101 executes the computer execution instruction stored in the memory 2102, to perform the following actions:
obtaining architecture information of an antenna system, where the antenna system includes at least one antenna module, the antenna module includes a longitudinally-arranged first antenna array and a longitudinally-arranged second antenna array, and a downtilt angle of a vertical lobe of a beam generated by the first antenna array is the same as or different from a downtilt angle of a vertical lobe of a beam generated by the second antenna array; and
mapping a virtual antenna port of the BBU to a physical antenna port in the antenna system based on the architecture information of the antenna system and the virtual antenna port.

The processor 2101 may further perform other steps in the foregoing method by executing the computer execution instruction stored in the memory 2102. For details, refer to the foregoing method. Details are not described herein again.

Each device in the BBU 21 is configured to perform the foregoing method. Therefore, for a beneficial effect of the BBU 21, refer to the beneficial effect of the foregoing method. Details are not described herein again.

An embodiment of the present invention further provides a computer storage medium, configured to store a computer software instruction used by the BBU. The computer software instruction includes a program designed for performing the method embodiment. A virtual antenna port mapping method may be implemented by executing the stored program.

Although the present invention is described with reference to the embodiments, in a process of implementing the present invention that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of plurality. A single processor or another unit may implement several functions enumerated in the claims. Some measures are recorded in dependent claims that are different from each other, but it does not mean that these measures cannot be combined to produce a better effect.

A person skilled in the art should understand that the embodiments of the present invention may be provided as a method, an apparatus (device), or a computer program product. Therefore, the present invention may use a form of hardware only embodiments, software only embodiments, or embodiments with a combination of software and hardware. Moreover, the present invention may use a form of a computer program product implemented on one or more computer-usable storage media (including but not limited to a disk memory, a CD-ROM, an optical memory, and the like) that include computer-usable program code. The computer program is stored/distributed in a proper medium and is provided as or used as a part of the hardware together with another hardware, or may be distributed in another form, for example, through the Internet or another wired or wireless telecommunications system.

The present invention is described with reference to the flowcharts and/or block diagrams of the method, the apparatus (device), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specified function in one or more processes in the flowcharts and/or in one or more blocks in the block diagrams.

These computer program instructions may also be stored in a computer readable memory that can instruct a computer or another programmable data processing device to work in a specific manner, so that the instructions stored in the computer readable memory generate an artifact that includes an instruction apparatus. The instruction apparatus implements a specified function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specified function in one or more processes in the flowcharts and/or in one or more blocks in the block diagrams.

Although the present invention is described with reference to specific features and the embodiments thereof, obviously, various modifications and combinations may be made to them without departing from the spirit and scope of the present invention. Correspondingly, the specification and the accompanying drawings are merely example description of the present invention defined by the accompanying claims, and is considered as any of or all modifications, variations, combinations or equivalents that cover the scope of the present invention. Obviously, a person skilled in the art can make various modifications and variations to the present invention without departing from the spirit and scope of the present invention. The present invention is intended to cover these modifications and variations provided that they fall within the scope of protection defined by the following claims of the present invention and their equivalent technologies.

## Claims

1. An antenna system, comprising:
at least one antenna module, wherein the antenna module comprises a longitudinally-arranged first antenna array and a longitudinally-arranged second antenna array; and
at least one electrical adjustment group in a one-to-one correspondence with the at least one antenna module, wherein the electrical adjustment group comprises a first electrical adjustment and a second electrical adjustment; the first electrical adjustment in the electrical adjustment group corresponding to each antenna module is connected to the first antenna array in the antenna module, and is configured to adjust a downtilt angle of a vertical lobe of a beam generated by the first antenna array in the antenna module; and the second electrical adjustment in the electrical adjustment group corresponding to each antenna module is connected to the second antenna array in the antenna module, and is configured to adjust a downtilt angle of a vertical lobe of a beam generated by the second antenna array in the antenna module.

2. The antenna system according to claim 1, wherein the first antenna array in the antenna module comprises N1 longitudinally-arranged antenna array elements, the second antenna array in the antenna module comprises N2 longitudinally-arranged antenna array elements, each antenna array element comprises one positive-45-degree polarized array element and one negative-45-degree polarized array element, N1 positive-45-degree polarized array elements of the first antenna array correspond to a third physical antenna port, N1 negative-45-degree polarized array elements of the first antenna array correspond to a fourth physical antenna port, N2 positive-45-degree polarized array elements of the second antenna array correspond to a first physical antenna port, N2 negative-45-degree polarized array elements of the second antenna array correspond to a second physical antenna port, and both N1 and N2 are integers greater than 0.

3. A virtual antenna port mapping method, comprising:
obtaining, by a baseband processing unit BBU, architecture information of an antenna system, wherein the antenna system comprises at least one antenna module, the antenna module comprises a longitudinally-arranged first antenna array and a longitudinally-arranged second antenna array, and a downtilt angle of a vertical lobe of a beam generated by the first antenna array is the same as or different from a downtilt angle of a vertical lobe of a beam generated by the second antenna array; and
mapping, by the BBU, a virtual antenna port of the BBU to a physical antenna port in the antenna system based on the architecture information of the antenna system and the virtual antenna port.

4. The method according to claim 3, wherein the first antenna array in the antenna module comprises N1 longitudinally-arranged antenna array elements, the second antenna array in the antenna module comprises N2 longitudinally-arranged antenna array elements, each antenna array element comprises one positive-45-degree polarized array element and one negative-45-degree polarized array element, N1 positive-45-degree polarized array elements of the first antenna array correspond to a third physical antenna port, N1 negative-45-degree polarized array elements of the first antenna array correspond to a fourth physical antenna port, N2 positive-45-degree polarized array elements of the second antenna array correspond to a first physical antenna port, N2 negative-45-degree polarized array elements of the second antenna array correspond to a second physical antenna port, and both N1 and N2 are integers greater than 0.

5. The method according to claim 4, wherein the antenna system comprises one antenna module, a downtilt angle of a vertical lobe of a beam generated by a first antenna array in the antenna module is the same as a downtilt angle of a vertical lobe of a beam generated by a second antenna array in the antenna module, there are two virtual antenna ports, and the mapping, by the BBU, a virtual antenna port of the BBU to a physical antenna port in the antenna system based on the architecture information of the antenna system and the virtual antenna port comprises:
mapping, by the BBU, a virtual antenna port 0 in the two virtual antenna ports to a first physical antenna port and a third physical antenna port in the antenna module by using a weighted value [1, 1], and mapping a virtual antenna port 1 in the two virtual antenna ports to a second physical antenna port and a fourth physical antenna port in the antenna module by using a weighted value [1, 1].

6. The method according to claim 4, wherein the antenna system comprises one antenna module, a downtilt angle of a vertical lobe of a beam generated by a first antenna array in the antenna module is different from a downtilt angle of a vertical lobe of a beam generated by a second antenna array in the antenna module, there are two virtual antenna ports, and the mapping, by the BBU, a virtual antenna port of the BBU to a physical antenna port in the antenna system based on the architecture information of the antenna system and the virtual antenna port comprises:
mapping, by the BBU, a virtual antenna port 0 in the two virtual antenna ports to a first physical antenna port and a fourth physical antenna port in the antenna module by using a weighted value [1, 1], and mapping a virtual antenna port 1 in the two virtual antenna ports to a second physical antenna port and a third physical antenna port in the antenna module by using a weighted value [1, -1].

7. The method according to claim 4, wherein the antenna system comprises one antenna module, there are four virtual antenna ports, and the mapping, by the BBU, a virtual antenna port of the BBU to a physical antenna port in the antenna system based on the architecture information of the antenna system and the virtual antenna port comprises:
mapping, by the BBU, a virtual antenna port 0 in the four virtual antenna ports to a first physical antenna port in the antenna module, mapping a virtual antenna port 1 in the four virtual antenna ports to a second physical antenna port in the antenna module, mapping a virtual antenna port 2 in the four virtual antenna ports to a third physical antenna port in the antenna module, and mapping a virtual antenna port 3 in the four virtual antenna ports to a fourth physical antenna port in the antenna module.

8. The method according to claim 4, wherein the antenna system comprises two antenna modules, a downtilt angle of a vertical lobe of a beam generated by a first antenna array in each antenna module is the same as a downtilt angle of a vertical lobe of a beam generated by a second antenna array in the antenna module, there are two virtual antenna ports, and the mapping, by the BBU, a virtual antenna port of the BBU to a physical antenna port in the antenna system based on the architecture information of the antenna system and the virtual antenna port comprises:
mapping, by the BBU, a virtual antenna port 0 in the two virtual antenna ports to a first physical antenna port of a first antenna module in the two antenna modules, a third physical antenna port of the first antenna module, a first physical antenna port of a second antenna module in the two antenna modules, and a third physical antenna port of the second antenna module by using a weighted value [1, 1, 1, 1], and mapping a virtual antenna port 1 in the two virtual antenna ports to a second physical antenna port of the first antenna module in the two antenna modules, a fourth physical antenna port of the first antenna module, a second physical antenna port of the second antenna module in the two antenna modules, and a fourth physical antenna port of the second antenna module by using a weighted value [1, 1, 1, 1].

9. The method according to claim 4, wherein the antenna system comprises two antenna modules, a downtilt angle of a vertical lobe of a beam generated by a first antenna array in each antenna module is different from a downtilt angle of a vertical lobe of a beam generated by a second antenna array in the antenna module, there are two virtual antenna ports, and the mapping, by the BBU, a virtual antenna port of the BBU to a physical antenna port in the antenna system based on the architecture information of the antenna system and the virtual antenna port comprises:
mapping, by the BBU, a virtual antenna port 0 in the two virtual antenna ports to a first physical antenna port of a first antenna module in the two antenna modules, a fourth physical antenna port of the first antenna module, a first physical antenna port of a second antenna module in the two antenna modules, and a fourth physical antenna port of the second antenna module by using a weighted value [1, 1, 1, 1], and mapping a virtual antenna port 1 in the two virtual antenna ports to a second physical antenna port of the first antenna module in the two antenna modules, a third physical antenna port of the first antenna module, a second physical antenna port of the second antenna module in the two antenna modules, and a third physical antenna port of the second antenna module by using a weighted value [-1, 1, -1, 1].

10. The method according to claim 4, wherein the antenna system comprises two antenna modules, a downtilt angle of a vertical lobe of a beam generated by a first antenna array in a first antenna module in the two antenna modules is different from a downtilt angle of a vertical lobe of a beam generated by a second antenna array in the first antenna module, a downtilt angle of a vertical lobe of a beam generated by a first antenna array in a second antenna module in the two antenna modules is the same as a downtilt angle of a vertical lobe of a beam generated by a second antenna array in the second antenna module, there are two virtual antenna ports, and the mapping, by the BBU, a virtual antenna port of the BBU to a physical antenna port in the antenna system based on the architecture information of the antenna system and the virtual antenna port comprises:
mapping, by the BBU, a virtual antenna port 0 in the two virtual antenna ports to a first physical antenna port of the first antenna module in the two antenna modules, a fourth physical antenna port of the first antenna module, a first physical antenna port of the second antenna module in the two antenna modules, and a third physical antenna port of the second antenna module by using a weighted value [1, 1, 1, 1], and mapping a virtual antenna port 1 in the two virtual antenna ports to a second physical antenna port of the first antenna module in the two antenna modules, a third physical antenna port of the first antenna module, a second physical antenna port of the second antenna module in the two antenna modules, and a fourth physical antenna port of the second antenna module by using a weighted value [-1, 1, 1, 1].

11. The method according to claim 4, wherein the antenna system comprises two antenna modules, there are four virtual antenna ports, and the mapping, by the BBU, a virtual antenna port of the BBU to a physical antenna port in the antenna system based on the architecture information of the antenna system and the virtual antenna port comprises:
mapping, by the BBU, a virtual antenna port 0 in the four virtual antenna ports to a first physical antenna port of a first antenna module in the two antenna modules and a first physical antenna port of a second antenna module in the two antenna modules by using a weighted value [1, 1], mapping a virtual antenna port 1 in the four virtual antenna ports to a second physical antenna port of the first antenna module in the two antenna modules and a second physical antenna port of the second antenna module in the two antenna modules by using a weighted value [1, 1], mapping a virtual antenna port 2 in the four virtual antenna ports to a third physical antenna port of the first antenna module in the two antenna modules and a third physical antenna port of the second antenna module in the two antenna modules by using a weighted value [1, 1], and mapping a virtual antenna port 3 in the four virtual antenna ports to a fourth physical antenna port of the first antenna module in the two antenna modules and a fourth physical antenna port of the second antenna module in the two antenna modules by using a weighted value [1, 1].

12. The method according to any one of claims 3 to 5, 7 and 8, and 10 and 11, wherein when a downtilt angle of a vertical lobe of a beam generated by a first antenna array in an antenna module is the same as a downtilt angle of a vertical lobe of a beam generated by a second antenna array in the antenna module, the method further comprises:
compensating, by the BBU, for a phase difference between the beam generated by the first antenna array in the antenna module and the beam generated by the second antenna array.

13. The method according to claim 12, wherein the compensating for a phase difference between the beam generated by the first antenna array in the antenna module and the beam generated by the second antenna array comprises:
setting, by the BBU, a phase of the beam generated by the first antenna array in the antenna module and a phase of the beam generated by the second antenna array, wherein the phase of the beam generated by the first antenna array in the antenna module is 360^{∗}sin((ET-1)^{∗}15/14.4/180^{∗*π*})^{∗}330^{∗}Frq/300 greater than the phase of the beam generated by the second antenna array in the antenna module, ET is the downtilt angle of the vertical lobe of the beam generated by each of the first antenna array and the second antenna array in the antenna module, and Frq is a frequency of a transmitted signal of a physical antenna port.

14. A baseband processing unit BBU, comprising a processor, a memory, a bus, and a communications interface, wherein
the memory is configured to store a computer execution instruction, the processor and the memory are connected through the bus, and the processor executes the computer execution instruction stored in the memory, to implement the method according to any one of claims 3 to 13.
